# EUROPEAN PATENT APPLICATION

(11) **EP 4 663 313 A1**
(43) Date of publication of application: **17.12.2025**
(21) Application number: 24791766.9
(22) Date of filing: 07.03.2024
(51) Int. Cl.: B07C 3/08, B65G 47/68

(54) **CONVEYING DEVICE AND LOGISTICS SYSTEM**

(30) Priority: 21.04.2023 CN 202320995599 U
(71) Applicant: Hai Robotics Co., Ltd., Shenzhen, Guangdong 518000 (CN)
(72) Inventor: GAO, Ming, Shenzhen, Guangdong 518000 (CN); ZHANG, Tangshuo, Shenzhen, Guangdong 518000 (CN)
(74) Representative: Nederlandsch Octrooibureau
(86) International application number: PCT/CN2024/080653
(87) International publication number: WO 2024/217178

(57) **Abstract**

This application provides a conveying apparatus and a logistics system. The conveying apparatus is configured to convey goods. The conveying apparatus includes a docking conveying device, a transfer device, and a sorting conveying device. The transfer device is docked between the docking conveying device and the sorting conveying device. The docking conveying device includes an input layer and an output layer. The input layer and the output layer are arranged along a height direction of the docking conveying device. The sorting conveying device is disposed on a side of the output layer along a conveying direction. A first end of the transfer device is docked with the input layer. A second end of the transfer device is docked with the sorting conveying device. There is a height difference between the sorting conveying device and the input layer. The transfer device is obliquely disposed from the input layer to the sorting conveying device, thereby improving versatility of the conveying apparatus, simplifying a structure of the conveying apparatus, improving space utilization, and reducing production costs.

## Description

### CROSS-REFERENCES

This application claims priority to Chinese Patent Application No. 202320995599.1, filed with the China National Intellectual Property Administration on April 21, 2023 and entitled "CONVEYING APPARATUS AND LOGISTICS SYSTEM", which is incorporated herein by reference in its entirety.

### TECHNICAL FIELD

This application relates to the field of warehouse logistics technologies, and in particular, to a conveying apparatus and a logistics system.

### BACKGROUND OF THE INVENTION

With the development of artificial intelligence and automation technologies, various types of automation apparatuses are widely applied in industry, daily life, and various other fields. A handling robot plays an important role in industries such as transportation and logistics. In a logistics system, when goods need to be shipped, received or transferred, a handling robot needs to place the loaded goods on a conveying line or a rack.

In a related technology, when a conveying line cooperates with a handling robot or a lifting apparatus to convey goods, to facilitate loading and unloading of the goods, a loopback line is usually set to convey the goods. In a process of conveying the goods, a height position of the goods needs to be changed to facilitate operations such as sorting the goods, while overturning of the goods needs to be avoided.

However, currently, a structure of the conveying line is complex and lacks versatility. Moreover, the conveying line occupies large space, resulting in high costs and low space utilization.

### SUMMARY OF THE INVENTION

This application provides a conveying apparatus and a logistics system, to solve technical problems of high costs and low space utilization due to a complex structure and poor versatility of a conveying line.

According to a first aspect, this application provides a conveying apparatus for conveying goods. The conveying apparatus includes a docking conveying device, a transfer device, and a sorting conveying device. The transfer device is docked between the docking conveying device and the sorting conveying device.

The docking conveying device includes an input layer and an output layer. The input layer and the output layer are arranged along a height direction of the docking conveying device. The sorting conveying device is disposed on a side of the output layer along a conveying direction. A first end of the transfer device is docked with the input layer. A second end of the transfer device is docked with the sorting conveying device. There is a height difference between the sorting conveying device and the input layer. The transfer device is obliquely disposed from the input layer to the sorting conveying device.

According to the conveying apparatus provided in this application, a transfer device is disposed in a conveying line. The transfer device may transfer goods between conveying lines of different heights, thereby enabling the movement of the goods between a high position and a low position, avoiding a connection between the conveying lines by using a slope conveying line, improving versatility of the conveying apparatus, simplifying a structure of the conveying apparatus, improving space utilization, and reducing production costs.

In an optional implementation, the sorting conveying device may be located on a side of the docking conveying device, and the transfer device is located on a same end of the docking conveying device and the sorting conveying device.

By means of such disposition, the compactness of arrangement between the docking conveying device, the sorting conveying device, and the transfer device can be improved, thereby improving space utilization.

In an optional implementation, the sorting conveying device and the output layer may be disposed in parallel and extend along a same direction.

By means of such disposition, when an entrance of the sorting conveying device is docked with the input layer, an exit of the sorting conveying device is docked with the output layer, thereby improving the layout reasonableness.

In an optional implementation, the transfer device may include a transmission mechanism and a transfer holder. The transfer holder is connected to the transmission mechanism. The transmission mechanism performs transmission in an oblique direction of the transfer device. The transfer holder is moved between a first position and a second position in a transmission direction of the transmission mechanism. The first position is a position at which an exit of the input layer is docked with the transfer device, and the second position is a position at which an entrance of the sorting conveying device is docked with the transfer device.

By means of such disposition, the goods may be stably moved between the exit of the input layer and the entrance of the sorting conveying device, thereby improving transfer smoothness.

In an optional implementation, the transfer holder may include a connection portion and a support portion, and the connection portion is connected to the transmission mechanism; the support portion is connected to the connection portion, and the support portion is horizontally disposed; the support portion is docked with the input layer when the transfer holder is located on the first end of the transfer device; and the support portion is docked with the sorting conveying device when the transfer holder is located on the second end of the transfer device.

By means of such disposition, in a process of transferring the goods, support stability of the goods can be ensured, so as to prevent the goods from falling off.

In an optional implementation, the support portion is disposed to be flush with the exit of the input layer when the support portion is docked with the input layer; and the support portion is disposed to be flush with the entrance of the sorting conveying device when the support portion is docked with the sorting conveying device.

By means of such disposition, the smoothness of transferring the goods between the input layer and the support portion can be improved, and the smoothness of transferring the goods between the support portion and the sorting conveying device can be improved.

In an optional implementation, the transmission mechanism may include a transmission member and a guiding member; the transmission member is configured to perform transmission between the first position and the second position, and the transfer holder is connected to the transmission member; and the guiding member extends along a transmission direction of the transmission member, and the transfer holder is slidably connected to the guiding member.

By means of such disposition, the smoothness of movement of the transfer holder can be improved.

In an optional implementation, the transmission member may include a synchronous belt and a plurality of synchronous wheels. The plurality of synchronous wheels is distributed at two ends of the transfer device, and the synchronous belt is disposed around the plurality of synchronous wheels; and the guiding member includes a guide track, the guide track is disposed on a side of the synchronous belt, and the guide track extends along a tensioning direction of the synchronous belt.

By means of such disposition, the efficiency and smoothness of movement of the transfer holder between the two ends of the transfer device can be improved.

In an optional implementation, the transfer device may further include a support holder, the transmission mechanism may further include a first driving unit, the support holder has a support surface, and the support surface is obliquely disposed from the first position to the second position; and the transmission member and the guiding member may be disposed on the support surface, the first driving unit may be disposed on a side of the support holder facing away from the support surface, and the first driving unit is configured to drive the transmission member to perform transmission.

By means of such disposition, a structural strength of the transfer device can be improved, and support holders of different oblique angles can be selected according to different application scenarios, thereby improving the versatility of the apparatus.

In an optional implementation, an exit of the sorting conveying device is docked with an entrance of the output layer, a displacement mechanism is provided at the exit of the sorting conveying device, and the displacement mechanism is configured to move the goods on the sorting conveying device to the output layer.

By means of such disposition, the smoothness and efficiency of moving goods from the sorting conveying device to the output layer can be improved.

In an optional implementation, the displacement mechanism may include a pushing member and a second driving unit, and the second driving unit is configured to drive the pushing member to move along a width direction of the sorting conveying device, to remove the goods on the sorting conveying device.

By means of such disposition, it can be ensured that the goods are stably moved out of the sorting conveying device.

In an optional implementation, a sorting position is disposed on a side of the sorting conveying device facing away from the docking conveying device.

By means of such disposition, when the goods pass through the sorting conveying device, a sorting operation may be performed.

According to a second aspect, this application provides a logistics system. The logistics system includes a docking apparatus and the conveying apparatus according to the above technical solutions. The docking apparatus is docked with the docking conveying device of the conveying apparatus, to send goods to an input layer of the docking conveying device, or receive goods from an output layer of the docking conveying device.

This application provides a conveying apparatus and a logistics system. The conveying apparatus is configured to convey goods. The conveying apparatus includes a docking conveying device, a transfer device, and a sorting conveying device. The transfer device is docked between the docking conveying device and the sorting conveying device. The docking conveying device includes an input layer and an output layer. The input layer and the output layer are arranged along a height direction of the docking conveying device. The sorting conveying device is disposed on a side of the output layer along a conveying direction. A first end of the transfer device is docked with the input layer. A second end of the transfer device is docked with the sorting conveying device. There is a height difference between the sorting conveying device and the input layer. The transfer device is obliquely disposed from the input layer to the sorting conveying device, thereby improving versatility of the conveying apparatus, simplifying a structure of the conveying apparatus, improving space utilization, and reducing production costs.

In addition to the technical problems resolved in the embodiments of this application, the technical features constituting the technical solutions, and the beneficial effects brought by the technical features of the technical solutions described above, other technical problems, other technical features included in the technical solutions, and the beneficial effects brought by the technical features that can be resolved by the conveying apparatus and the logistics system provided in this application are further described in detail in specific implementations.

### BRIEF DESCRIPTION OF DRAWINGS

To describe the technical solutions of the embodiments of this application or the existing technology more clearly, the following briefly introduces the accompanying drawings required for describing the embodiments or the existing technology. Apparently, the accompanying drawings in the following description show some embodiments of this application, and a person of ordinary skill in the art may still derive other drawings from these accompanying drawings without creative efforts.
FIG. 1 is a first schematic structural diagram of a conveying apparatus according to an embodiment of this application;
FIG. 2 is a front view of a conveying apparatus according to an embodiment of this application;
FIG. 3 is a side view of a conveying apparatus according to an embodiment of this application;
FIG. 4 is a top view of a conveying apparatus according to an embodiment of this application;
FIG. 5 is a second schematic structural diagram of a conveying apparatus according to an embodiment of this application;
FIG. 6 is a partial view of a position A in FIG. 5; and
FIG. 7 is a partial view of a position B in FIG. 5.

### DESCRIPTION OF REFERENCE NUMERALS:

100-docking conveying device; 110-input layer; 120-output layer;
200-transfer device; 210-transmission mechanism; 211-transmission member; 212-guiding member; 213-first driving unit; 220-transfer holder; 221-connection portion; 222-support portion; 230-support holder; 231-support surface;
300-sorting conveying device; 310-displacement mechanism; 311-pushing member; 312-second driving unit; 320-sorting position;
400-goods.

### DETAILED DESCRIPTION

In order to make objectives, technical solutions, and advantages of embodiments of this application clearer, the technical solutions in the embodiments of this application will be clearly and completely described in the following with reference to the accompanying drawings in embodiments of this application. Apparently, the embodiments to be described are a part rather than all of the embodiments of this application. All other embodiments obtained by a person of ordinary skill in the art based on the embodiments of this application without making creative efforts shall fall within the protection scope of this application.

First, a person skilled in the art should understand that the implementations are merely used for explaining the technical principles of this application, and are not intended to limit the protection scope of this application. A person skilled in the art may make adjustments to be suitable for specific application scenarios as needed.

Second, it should be noted that, in the description of this application, terms about orientation or position relationships indicated by the terms such as "inner" and "outer" are based on orientation or position relationships shown in the accompanying drawings, and are used only for ease and brevity of description, rather than indicating or implying that the apparatus or member needs to have a particular orientation or needs to be constructed and operated in a particular orientation. Therefore, such terms should not be construed as a limit to this application.

Moreover, it should also be noted that, in the description of this application, it should be noted that unless otherwise explicitly specified or defined, the terms such as "connect", and "connection" should be understood in a broad sense. For example, the connection may be a fixed connection, a detachable connection, or an integral connection; or the connection may be a mechanical connection or an electrical connection; or the connection may be an internal communication between two members. A person of ordinary skill in the art may understand the specific meanings of the foregoing terms in this application according to specific situations.

In the description of this specification, the description of the reference terms such as "an embodiment", "some embodiments", "exemplary embodiments", "example", "specific example", or "some examples" means that the specific features, structures, materials or characteristics described with reference to the embodiment or example are included in at least one embodiment or example of the present disclosure. In this specification, exemplary descriptions of the foregoing terms do not necessarily refer to the same embodiment or example. In addition, the described specific features, structures, materials, or characteristics may be combined in a proper manner in any one or more of the embodiments or examples.

With the development of artificial intelligence and automation technologies, various types of robots are widely applied in industry, daily life, and various other fields. A handling robot plays an important role in industries such as transportation and logistics. In a logistics system, when goods need to be shipped, received or transferred, a handling robot needs to place the loaded goods on a conveying line or a rack. When a conveying line cooperates with a handling robot or a lifting apparatus to convey goods, to facilitate loading and unloading of the goods, a loopback line is usually set to convey the goods. In a process of conveying the goods, a slope is disposed in the conveying line to change a height position of the goods to facilitate operations such as sorting the goods. However, disposing a slope in a continuous conveying line needs to lengthen the conveying line to keep the slope gentle and avoid overturning of the goods. In addition, a structure of the conveying line with the slope is more complex than a structure of a horizontal conveying line. Therefore, currently, the structure of the conveying line is complex, the versatility is poor, and the conveying line occupies large space, resulting in high costs and low space utilization.

In view of the foregoing problems, embodiments of this application provide a conveying apparatus and a logistics system. A conveying line of the conveying apparatus is divided into a plurality of parts that can be docked, and goods are transferred between conveying lines of different heights by using an apparatus for transferring the goods, thereby simplifying a structure of the conveying apparatus, improving versatility, reducing costs and ensuring high space utilization.

For convenience of understanding, application scenarios according to the embodiments of this application are first described.

The conveying apparatus provided in this embodiment of this application may be applied to different fields such as logistics sorting on an industrial production line, outbounding and inbounding of a stock product in the manufacturing industry, outbounding and inbounding of a product in the retail industry, and express outbounding and inbounding of e-commerce logistics. A product or goods related to transportation may be an industrial part, an electronic accessory or product, medicine, a clothing accessory, food, a book, and the like. In addition, the conveying apparatus may be docked with a handling robot, or may be docked with another conveying apparatus in a logistics system. This is not specifically limited in this embodiment of this application. Moreover, materials unloaded by an unloading apparatus may be goods, or material containers filled with a product may be stored. In addition, a shape of the product may be a regular shape, or may be an irregular structure. These materials are named as "goods" below, and is not described in detail again.

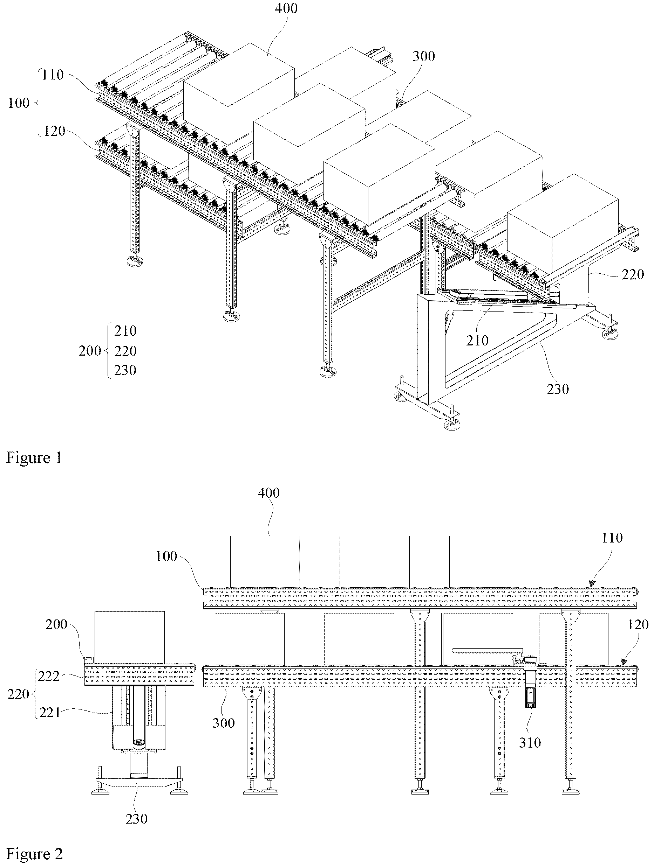

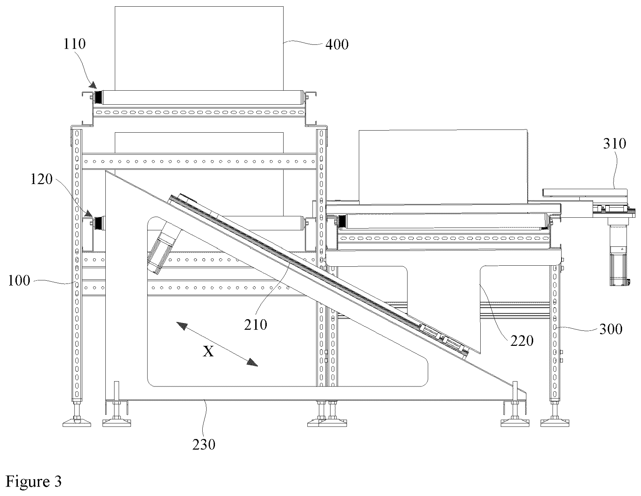

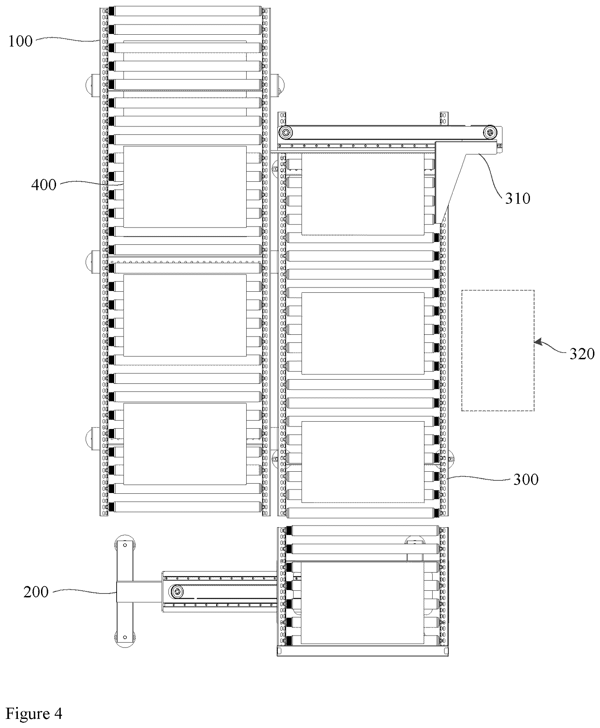

FIG. 1 is a first schematic structural diagram of a conveying apparatus according to an embodiment of this application. FIG. 2 is a front view of a conveying apparatus according to an embodiment of this application. FIG. 3 is a side view of a conveying apparatus according to an embodiment of this application. FIG. 4 is a top view of a conveying apparatus according to an embodiment of this application.

As shown in FIG.1 to FIG.4, an embodiment of this application provides a conveying apparatus for conveying goods 400. The conveying apparatus includes a docking conveying device 100, a transfer device 200, and a sorting conveying device 300. The transfer device 200 is docked between the docking conveying device 100 and the sorting conveying device 300.

The docking conveying device 100 is configured to be docked with an external apparatus, and includes, but is not limited to, a handling robot, an elevator, and the like. After receiving the goods 400, the docking conveying device 100 may convey the goods 400 to the transfer device 200. The transfer device 200 is used to transfer the goods 400 to the sorting conveying device 300. After the goods 400 complete a sorting operation on the sorting conveying device 300, the goods 400 may be transmitted back to the docking conveying device 100, and may be output to the external apparatus.

In some embodiments, the docking conveying device 100 includes an input layer 110 and an output layer 120. The input layer 110 and the output layer 120 are arranged along a height direction of the docking conveying device 100. The input layer 110 may receive goods 400 sent by the external apparatus. The sorting conveying device 300 is disposed on a side of the output layer 120 along a conveying direction. The output layer 120 may send sorted goods 400 to the external apparatus. A first end of the transfer device 200 is docked with the input layer 110, and a second end of the transfer device 200 is docked with the sorting conveying device 300. The transfer device 200 is configured to transfer the good 400 from the input layer 110 to the sorting conveying device 300, thereby implementing a transfer operation of the goods 400 between the docking conveying device 100 and the sorting conveying device 300.

It may be understood that, to improve space utilization, the input layer 110 and the output layer 120 form a plurality of layers of conveying lines that are arranged along the height direction of the docking conveying device 100. That is, there is a height difference between the input layer 110 and the output layer 120. The conveying line of the sorting conveying device 300 may be docked with the output layer 120, so that there is a height difference between the conveying line of the sorting conveying device 300 and the input layer 110. The transfer device 200 is obliquely disposed from the input layer 110 to the sorting conveying device 300. The transfer device 200 may transfer the goods 400 between conveying lines of different heights.

It should be noted that, in the conveying apparatus provided in this embodiment of this application, the transfer device 200 may transfer the goods 400 between the conveying lines of different heights, thereby implementing the movement of the goods 400 between a high position and a low position, and avoiding a connection between the conveying lines by using a slope conveying line. The transfer device 200 is a device that can be arranged independently, thus improving versatility of the conveying apparatus. Depending on different heights and arrangement positions of the docking conveying device 100 and the sorting conveying device 300, the arrangement position of the transfer device 200 can be designed and modified, thereby simplifying a structure of the conveying apparatus, improving space utilization, and reducing production costs.

The following first describes a specific position relationship of the transfer device 200 relative to the sorting conveying device 300 and the docking conveying device 100 in detail.

Still referring to FIG. 1 to FIG. 4, in a possible implementation, there is a height difference between the sorting conveying device 300 and the input layer 110, and the transfer device 200 is obliquely disposed from the input layer 110 to the sorting conveying device 300. In this way, the transfer device 200 having an independent structure may be used to achieve movement of the goods 400 between positions of different heights, thereby improving the flexibility of the transfer of the goods 400.

It may be understood that height positions of the first end and the second end of the transfer device 200 that is obliquely disposed respectively correspond to heights of the input layer 110 and the sorting conveying device 300. There is a height difference between an entrance of the sorting conveying device 300 and an exit of the input layer 110. The transfer device 200 plays a connecting role between the exit of the input layer 110 and the entrance of the sorting conveying device 300, to transfer the goods 400 from the exit of the input layer 110 to an entrance position of the sorting conveying device 300.

In some embodiments, the sorting conveying device 300 may be located at a side of the docking conveying device 100, and the transfer device 200 is located at a same end of the docking conveying device 100 and the sorting conveying device 300. That is, the exit of the input layer 110 and the entrance of the sorting conveying device 300 are located at a same end of the conveying apparatus.

It may be understood that, conveying lines of the sorting conveying device 300 and the docking conveying device 100 may be disposed in parallel, so that the sorting conveying device 300 and the docking conveying device 100 may be disposed in parallel. The transfer device 200 may be aligned with both the input layer 110 and the sorting conveying device 300 at an end of the conveying apparatus, thereby improving compactness and space utilization of an arrangement of the docking conveying device 100, the sorting conveying device 300, and the transfer device 200.

For example, the input layer 110, the output layer 120, and the sorting conveying device 300 may all extend along a horizontal direction. The entrance of the input layer 110 and the exit of the output layer 120 may be located at the same end of the conveying apparatus, to facilitate connection to the external apparatus. The input layer 110 may be located above the output layer 120, and a height of the output layer 120 is relatively low, so that a height of the sorting conveying device 300 docked with the output layer 120 is relatively low, to facilitate a sorting operation. In this structural design, the transfer device 200 may transfer the goods 400 on the input layer 110 from a high-position conveying line to a low-position conveying line of the sorting conveying device 300, to transfer the goods 400 from a high position to a low position.

Certainly, the output layer 120 may also be located above the input layer 110, and the height of the sorting conveying device 300 docked with the output layer 120 is higher than that of the input layer 110. In this structural design, the transfer device 200 may transfer the goods 400 on the input layer 110 from the low-position conveying line to the high-position conveying line of the sorting conveying device 300, to transfer the goods 400 from the low position to the high position. A specific transfer direction of the transfer device 200 is not limited in this embodiment of this application, and only the conveying lines of different heights need to be connected.

In some embodiments, the sorting conveying device 300 may be disposed parallel to the output layer 120, and extend along a same direction. In this way, when the entrance of the sorting conveying device 300 is docked with the input layer 110, the exit of the sorting conveying device 300 is docked with the output layer 120, thereby improving layout reasonableness.

It may be understood that when the input layer 110, the output layer 120, and the sorting conveying device 300 convey the goods 400, the three may all play a role of buffering the goods 400. When transferring the goods 400, the transfer device 200 is first docked with the input layer 110 to obtain the goods 400, then moves the goods 400 to the sorting conveying device 300, and finally returns to a state of being docked with the input layer 110 to perform a next transferring task. In a process in which the transfer device 200 moves the goods 400, the to-be-shipped goods 400 on the input layer 110 may be buffered on the input layer 110. The quantity of the goods 400 moved by the transfer device 200 each time may be one, two, three, or more. This is not specifically limited in this embodiment of this application.

It should be noted that, the input layer 110, the output layer 120, and the sorting conveying device 300 may all be conveying lines supported by holders. The conveying lines may convey the good 400. A conveying direction of the goods 400 of the input layer 110 is opposite to that of the output layer 120, and the conveying direction of the goods 400 of the output layer 120 is the same as that of the sorting conveying device 300, to ensure that the exit and the entrance of the goods 400 on the docking conveying device 100 are located at the same end, so as to facilitate connection to the external apparatus.

Similar structures may be used for the input layer 110, the output layer 120, and the conveying line of the sorting conveying device 300. Exemplary descriptions are provided below.

In some embodiments, the conveying line may include multiple rolls that are disposed in rotation. The multiple rolls are parallel to each other and may form a structure similar to a fluent bar. The multiple rolls are arranged along a conveying direction of the goods 400 corresponding to the conveying line. When the goods 400 is moved to the conveying line, the friction force during movement of the goods 400 may be reduced by rolling of the rolls.

For example, the roll may include an active roll, or may include a passive roll. When the roll is the active roll, a transmission direction of the roll may be consistent with a moving direction of the goods 400, so as to provide a driving force for moving the goods 400 and ensure a smoothness of moving the goods 400. When the roll is the passive roll, the goods 400 move under inertia that is formed by the driving force provided by the passive roll, and a rolling friction is provided between the roll and the goods 400, so as to reduce movement resistance of the goods 400.

It should be noted that, a length of the roll may be approximated to widths of the input layer 110, the output layer 120, and the sorting conveying device 300. The length of the roll may be set according to a specific logistics scenario and a type of the conveyed goods 400. This is not specifically limited in this embodiment of this application.

The following describes in detail a specific structure of the transfer device 200 and a specific principle of the transfer device 200 to transfer the goods 400 between positions of different heights.

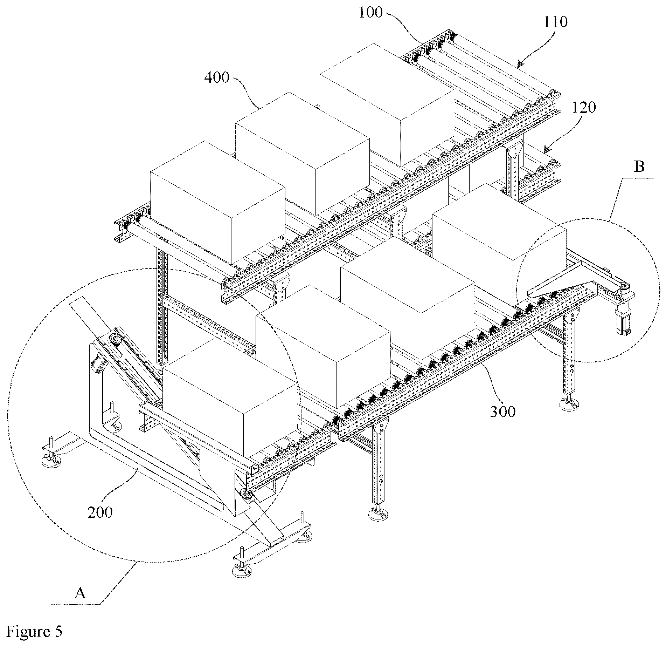

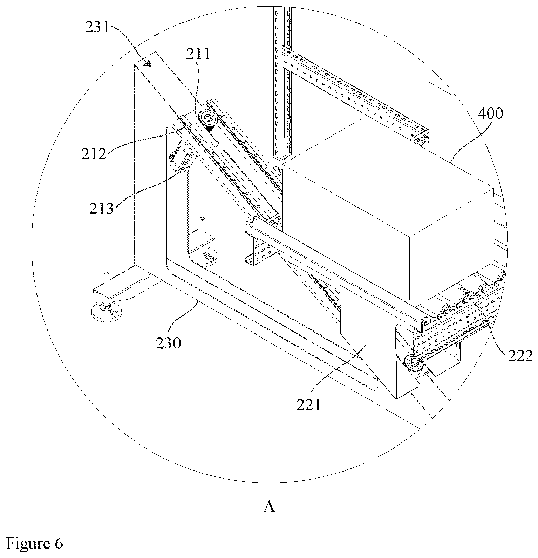

FIG. 5 is a second schematic structural diagram of a conveying apparatus according to an embodiment of this application, and FIG. 6 is a partial view of a position A in FIG. 5.

Referring to FIG. 1 to FIG. 6, in a possible implementation, the transfer device 200 may include a transmission mechanism 210 and a transfer holder 220. The transfer holder 220 is connected to the transmission mechanism 210. The transmission mechanism 210 may perform transmission in an oblique direction of the transfer device 200. The transfer holder 220 may move between a first position and a second position in the transmission direction of the transmission mechanism 210. The first position is a position at which the exit of the input layer 110 is docked with the transfer device 200, and the second position is a position at which the entrance of the sorting conveying device 300 is docked with the transfer device 200. In this way, the goods 400 may be stably moved between the exit of the input layer 110 and the entrance of the sorting conveying device 300, thereby improving transfer smoothness.

It may be understood that, the transfer holder 220 is configured to carry and support the goods 400. The transmission mechanism 210 is configured to drive the transfer holder 220 to move. Because there is a height difference between the exit of the input layer 110 and the entrance of the sorting conveying device 300, a movement direction in which the transmission mechanism 210 drives the transfer holder 220 has an oblique angle. However, to ensure stability of supporting the goods 400, a bearing surface of the transfer holder 220 for the goods 400 may be a horizontal plane. For example, the transfer holder 220 performs reciprocal movement along the X direction in FIG. 3.

In some embodiments, the transfer holder 220 may include a connection portion 221 and a support portion 222. The connection portion 221 is connected to the transmission mechanism 210. The support portion 222 is connected to the connection portion 221, and the support portion 222 is horizontally disposed. The connection portion 221 may ensure that the transfer holder 220 has sufficient structural strength in a process of supporting the goods 400. The support portion 222 is used to form a bearing surface for the goods 400 and support the goods 400, so as to ensure support stability for the good 400 in a process of transferring the goods 400 and prevent the goods 400 from falling off.

It may be understood that when the transfer holder 220 is located at the first end of the transfer device 200, the support portion 222 may be docked with the input layer 110, and the goods 400 may be transferred to the support portion 222 from the exit of the input layer 110. However, when the transfer holder 220 is located at the second end of the transfer device 200, the support portion 222 may be docked with the sorting conveying device 300, and the goods 400 on the support portion 222 may be moved to the sorting conveying device 300.

For example, when the support portion 222 is docked with the input layer 110, the support portion 222 may be disposed to be flush with the exit of the input layer 110. Correspondingly, when the support portion 222 is docked with the sorting conveying device 300, the support portion 222 may be disposed to be flush with the entrance of the sorting conveying device 300, thereby improving the smoothness of transferring the goods 400 between the input layer 110 and the support portion 222, and improving the smoothness of transferring the goods 400 between the support portion 222 and the sorting conveying device 300.

It should be noted that, the connection portion 221 may be a sheet metal, which includes, but is not limited to, a metal or an alloy such as iron or aluminum, or the connection portion 221 may be an engineering plastic having relatively high structural strength. A specific form and material of the connection portion 221 are not limited in this embodiment of this application. The support portion 222 may include multiple rolls, similar to a structure of the conveying line, so as to receive and send the goods 400. Details are not described herein again.

In some embodiments, the transmission mechanism 210 may include a transmission member 211 and a guiding member 212. The transmission member 211 is configured to perform transmission between the first position and the second position. The transfer holder 220 may be connected to the transmission member 211. The guiding member 212 extends in the transmission direction of the transmission member 211. The transfer holder 220 is slidably connected to the guiding member 212.

It may be understood that, in a transmission process of the transmission member 211, the transmission member 211 may drive the transfer holder 220 to move along the oblique direction of the transfer device 200, and the guiding member 212 may provide a guiding function and a position limiting function for the transfer holder 220, thereby improving the smoothness of moving the transfer holder 220.

For example, the transfer member 211 may include a synchronous belt and multiple synchronous wheels. The multiple synchronous wheels are distributed on two ends of the transfer device 200. The synchronous belt is disposed around the multiple synchronous wheels. The guiding member 212 includes a guide track. The guide track is disposed on a side of the synchronous belt, and the guide track extends along a tensioning direction of the synchronous belt, so as to improve efficiency and smoothness of moving the transfer holder 220 between the two ends of the transfer device 200.

The connection portion 221 may be connected to the transmission member 211 by using a fastener. The fastener includes, but is not limited to, a screwing connection, a snapping connection, and the like. In addition, the connection portion 221 may cooperate with the guiding member 212 by using a sliding block.

In some embodiments, the transfer device 200 may further include a support holder 230, and the transmission mechanism 210 may further include a first driving unit 213. The support holder 230 has a support surface 231. The support surface 231 may be obliquely disposed from the first position to the second position. The transmission member 211 and the guiding member 212 may be disposed on the support surface 231. The first driving unit 213 may be disposed on a side of the support holder 230 facing away from the support surface 231. The first driving unit 213 is configured to drive the transmission member 211 to perform transmission, so as to improve structural strength of the transfer device 200. In addition, the support holder 230 having different oblique angles may be selected according to different application scenarios, thereby improving apparatus versatility.

It may be understood that, the first driving unit 213 may be a motor. Using an example in which the transmission member 211 includes a synchronous belt and multiple synchronous wheels, the first driving unit 213 may drive the synchronous wheels to rotate, to drive the synchronous belt to perform transmission around the synchronous wheels. When the synchronous belt performs transmission, the transfer holder 220 may be driven to move. Forward transmission and backward transmission of the synchronization belt may be implemented by means of forward rotation and reverse rotation of the first driving unit 213. Correspondingly, reciprocal movement of the transfer holder 220 between the exit of the input layer 110 and the entrance of the sorting conveying device 300 may be implemented.

For example, the support holder 230 may have a triangular structure, to improve support strength of the support holder 230. Meanwhile, an oblique surface of the triangular structure of the support holder 230 may form the support surface 231 for mounting the transmission mechanism 210.

It should be noted that, because the transfer device 200 is independent of the docking conveying device 100 and the sorting conveying device 300, the support holders 230 of different structures may be selected to adapt to the transmission mechanism 210, so as to adapt to the docking conveying device 100 and the sorting conveying device 300 of different heights, thereby improving versatility of the conveying apparatus.

In addition, in the conveying apparatus provided in this embodiment of this application, the transmission mechanism 210 may use another transmission structure type, which includes, but is not limited to, wire rope transmission, chain transmission, rack and gear transmission, link transmission, and cam transmission, and may be driven by using the motor. A specific transmission type of the transmission mechanism 210 is not limited in this embodiment of this application.

A specific manner in which the sorting conveying device 300 moves the goods 400 to the output layer 120 is described in detail below.

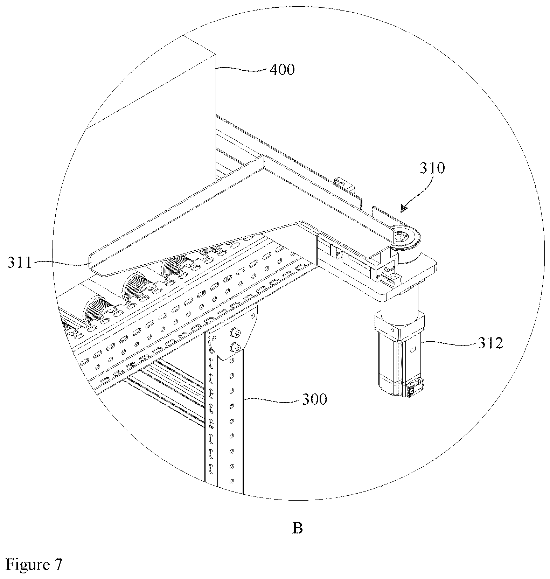

FIG. 7 is a partial view of a position B in FIG. 5.

Referring to FIG. 1 to FIG. 7, in a possible implementation, an exit of the sorting conveying device 300 is docked with an entrance of the output layer 120. A displacement mechanism 310 is provided at the exit of the sorting conveying device 300. The displacement mechanism 310 is configured to move the goods 400 on the sorting conveying device 300 to the output layer 120, to improve smoothness and efficiency of moving the goods 400 from the sorting conveying device 300 to the output layer 120.

It may be understood that the sorting conveying device 300 may be located on a side of the output layer 120, and an exit of the sorting conveying device 300 is docked with an entrance of the output layer 120. Because a transmission direction of the sorting conveying device 300 is consistent with that of the output layer 120, the goods 400 may be pushed from the sorting conveying device 300 to the output layer 120 by using the displacement mechanism 310.

In some embodiments, the displacement mechanism 310 may include a pushing member 311 and a second driving unit 312, and the second driving unit 312 is configured to drive the pushing member 311 to move along a width direction of the sorting conveying device 300, so as to move away the goods 400 on the sorting conveying device 300, thereby ensuring that the goods 400 is stably moved out of the sorting conveying device 300.

The second driving unit 312 may be a motor, and the pushing member 311 may have a plate shape. When the second driving unit 312 drives the pushing member 311 to move, the pushing member 311 may abut with an end face of the goods 400 at an exit position of the sorting conveying device 300, and push the goods 400 from the sorting conveying device 300 into the entrance of the output layer 120.

For example, the second driving unit 312 may drive a push-pull member to move by using a structure similar to that of the transmission mechanism 210. The movement includes, but is not limited to, synchronous belt transmission, wire rope transmission, chain transmission, rack and gear transmission, link transmission, and cam transmission. Details are not described herein again.

It should be noted that, the sorting conveying device 300 is mainly used in a logistics system to provide a conveying line in a process of sorting the goods 400. To improve space utilization, the sorting conveying device 300 is disposed close to the docking conveying device 100. Therefore, a sorting position 320 may be disposed on a side facing away from the docking conveying device 100, and a sorting operation may be performed when the goods 400 pass through the sorting conveying device 300. In addition, when the goods 400 on the sorting conveying device 300 are sorted, sorting may be performed manually, or a sorting robot may be disposed at the sorting position 320 to perform an automatic sorting operation. This is not specifically limited in this embodiment of this application.

An embodiment of this application further provides a logistics system. The logistics system includes a docking apparatus and the conveying apparatus according to the above technical solutions. The docking apparatus is docked with the docking conveying device 100 of the conveying apparatus, to send the goods 400 to the input layer 110 of the docking conveying device 100, or receive the goods 400 on the output layer 120 of the docking conveying device 100.

It may be understood that, the docking apparatus may be a handling robot, an elevator, or another conveying line in a process of outbounding and inbounding. Using the handling robot as an example, the handling robot may be docked with an exit and an entrance of the docking conveying device 100, and may buffer the goods 400 into the input layer 110 of the docking conveying device 100, so that the goods 400 may enter the sorting conveying device 300 for sorting. Alternatively, the handling robot may obtain the sorted goods 400 on the output layer 120 of the docking conveying device 100, so as to transfer the sorted goods 400 to a next process.

In addition, for an application scenario of the logistics system provided in this embodiment, according to a type of a specific goods, the logistics system may be applied to different fields such as outbounding of a stock product in the manufacturing industry, outbounding of a product in the retail industry, and express outbounding and sorting of e-commerce logistics. In addition, the product or the goods related to transportation may be an industrial part, an electronic accessory or product, a clothing accessory, food, or the like. This is not specifically limited in this embodiment of this application.

Finally, it should be noted that: the foregoing embodiments are merely used for describing the technical solutions of this application, but are not intended to limit the application. Although this application is described in detail with reference to the foregoing embodiments, it should be appreciated by a person skilled in the art that, modifications may still be made to the technical solutions described in the foregoing embodiments, or equivalent replacements may be made to the part or the entirety of the technical features; and these modifications or replacements will not cause the essence of corresponding technical solutions to depart from the scope of the technical solutions in the embodiments of this application.

## Claims

1. A conveying apparatus, wherein the conveying apparatus is configured to convey goods, the conveying apparatus comprises a docking conveying device, a transfer device, and a sorting conveying device, and the transfer device is docked between the docking conveying device and the sorting conveying device; and
the docking conveying device comprises an input layer and an output layer, the input layer and the output layer are arranged along a height direction of the docking conveying device; the sorting conveying device is disposed on a side of the output layer along a conveying direction; a first end of the transfer device is docked with the input layer; a second end of the transfer device is docked with the sorting conveying device; there is a height difference between the sorting conveying device and the input layer; and the transfer device is obliquely disposed from the input layer to the sorting conveying device.

2. The conveying apparatus according to claim 1, wherein the sorting conveying device is located on a side of the docking conveying device, and the transfer device is located on a same end of the docking conveying device and the sorting conveying device.

3. The conveying apparatus according to claim 2, wherein the sorting conveying device and the output layer are disposed in parallel and extend along a same direction.

4. The conveying apparatus according to any one of claims 1 to 3, wherein the transfer device comprises a transmission mechanism and a transfer holder, the transfer holder is connected to the transmission mechanism, the transmission mechanism performs transmission in an oblique direction of the transfer device, and the transfer holder is moved between a first position and a second position in a transmission direction of the transmission mechanism; and
the first position is a position at which an exit of the input layer is docked with the transfer device, and the second position is a position at which an entrance of the sorting conveying device is docked with the transfer device.

5. The conveying apparatus according to claim 4, wherein the transfer holder comprises a connection portion and a support portion, and the connection portion is connected to the transmission mechanism; the support portion is connected to the connection portion, and the support portion is horizontally disposed; the support portion is docked with the input layer when the transfer holder is located on the first end of the transfer device; and the support portion is docked with the sorting conveying device when the transfer holder is located on the second end of the transfer device.

6. The conveying apparatus according to claim 5, wherein the support portion is disposed to be flush with the exit of the input layer when the support portion is docked with the input layer; and the support portion is disposed to be flush with the entrance of the sorting conveying device when the support portion is docked with the sorting conveying device.

7. The conveying apparatus according to claim 5, wherein the transmission mechanism comprises a transmission member and a guiding member; the transmission member is configured to perform transmission between the first position and the second position, and the transfer holder is connected to the transmission member; and the guiding member extends along a transmission direction of the transmission member, and the transfer holder is slidably connected to the guiding member.

8. The conveying apparatus according to claim 7, wherein the transmission member comprises a synchronous belt and a plurality of synchronous wheels; the plurality of synchronous wheels are distributed at two ends of the transfer device, and the synchronous belt is disposed around the plurality of synchronous wheels; and the guiding member comprises a guide track, the guide track is disposed on a side of the synchronous belt, and the guide track extends along a tensioning direction of the synchronous belt.

9. The conveying apparatus according to claim 7, wherein the transfer device further comprises a support holder, the transmission mechanism further comprises a first driving unit, the support holder has a support surface, and the support surface is obliquely disposed from the first position to the second position; and the transmission member and the guiding member are disposed on the support surface, the first driving unit is disposed on a side of the support holder facing away from the support surface, and the first driving unit is configured to drive the transmission member to perform transmission.

10. The conveying apparatus according to any one of claims 1 to 3, wherein an exit of the sorting conveying device is docked with an entrance of the output layer, a displacement mechanism is provided at the exit of the sorting conveying device, and the displacement mechanism is configured to move the goods on the sorting conveying device to the output layer.

11. The conveying apparatus according to claim 10, wherein the displacement mechanism comprises a pushing member and a second driving unit, and the second driving unit is configured to drive the pushing member to move along a width direction of the sorting conveying device, to remove the goods on the sorting conveying device.

12. The conveying apparatus according to any one of claims 1 to 3, wherein a sorting position is disposed on a side of the sorting conveying device facing away from the docking conveying device.

13. A logistics system, wherein the logistics system comprises a docking apparatus and the conveying apparatus according to any one of claims 1 to 12, the docking apparatus is docked with a docking conveying device of the conveying apparatus, to send goods to an input layer of the docking conveying device, or receive goods from an output layer of the docking conveying device.
